# DEMANDE DE BREVET EUROPEEN

(11) **EP 1 587 238 A1**
(43) Date de publication de la demande: **19.10.2005**
(21) Numéro de dépôt: 05290824.1
(22) Date de dépôt: 14.04.2005
(51) Int. Cl.: H04L 9/32, H04Q 7/32

(54) **Procédé de vérification dans un terminal radio de l'authenticité de certificats numériques et système d'authentification**

(30) Priorité: 16.04.2004 FR 0404032
(71) Demandeur: SAGEM S.A., 75512 Paris Cedex 15 (FR)
(72) Inventeur: Jorel, Jean-Claude, 78600 Maison-Laffitte (FR)
(74) Mandataire: Debay, Yves

(57) **Abrégé**

La présente invention concerne un procédé de vérification dans un terminal radio de l'authenticité d'un certificat numérique stocké dans un module apte à communiquer avec ledit terminal, comportant une étape (50) de lecture du certificat numérique, caractérisé en ce qu'il comprend les étapes suivantes :
- formation de données signalétiques (51) du certificat lu par le terminal radio;
- signature électronique (500) à partir des données signalétiques par le terminal radio pour obtenir une empreinte numérique chiffrée (CHF1);
- transmission par le terminal radio (56), vers un serveur d'un réseau, de données de requête incluant les données signalétiques (F) et la signature du terminal radio;
- authentification du terminal radio (510) réalisée par le serveur puis, vérification (60) par le serveur de la correspondance des données signalétiques (F);
- envoi (63) depuis le serveur du réseau vers le terminal mobile de données de réponse (F3).

## Description

### DOMAINE TECHNIQUE DE L'INVENTION

La présente invention se rapporte au domaine de la sécurisation d'informations dans les systèmes de télécommunication. L'invention concerne plus particulièrement un procédé de vérification dans un terminal radio de l'authenticité de certificats numériques et un système d'authentification pour la mise en oeuvre de ce procédé.

Dans ce qui suit, on entendra par terminal radio tout équipement émetteur récepteur portatif, portable, susceptible de fonctionner sur un réseau transporteur, par exemple de radiotéléphonie mobile tel que GSM, GPRS, UMTS et tout type de réseau analogue, par exemple WLAN.

### ARRIERE-PLAN TECHNOLOGIQUE DE L'INVENTION

Dans l'art antérieur, le problème de la sécurisation des échanges et des infrastructures de traitement de l'information a été abordé depuis longtemps. Jusqu'à présent, de nombreuses solutions ont été proposées, qui reposent sur des technologies de cryptographie connues. L'infrastructure de gestion de clés publiques en particulier (PKI pour "Public Key Infrastructure") est la solution reposant sur des technologies de clés asymétriques (publique Kp, privée Ks) qui est la plus développée. Une clé publique Kp correspond à une suite de chiffres utilisée pour chiffrer ou déchiffrer un message transmis entre un émetteur et un récepteur et associé à une clé secrète appairée, appelée également clé privée Ks. Le message peut ainsi être chiffré par une clé publique, connue d'un ensemble d'utilisateurs, et déchiffré par une clé secrète connue du seul récepteur ou inversement chiffré par une clé privée Ks et déchiffré par la clé publique. Tandis que le chiffrement par clé publique Kp assure la confidentialité du message, le chiffrement par clé privée Ks en assure l'intégrité.

Cette solution repose en fait sur l'idée que l'initialisation d'un échange sécurisé ou d'un accès à un contenu sécurisé, repose sur l'utilisation de clés de cryptage publiques Kp, garantissant que seul le détenteur de la clé privée Ks associée pourra décrypter le message, et de certificats associant de manière sûre l'identité du partenaire à la clé publique Kp, car certifiée (cryptée par clé privée Ks) par une autorité de certification AUC (sigle pour "Authentification Center").

Il est ainsi connu par le document WO 02/29742 l'utilisation de certificats 509 standards par un serveur Internet agissant comme intermédiaire pour authentifier les clients. Ce document décrit la possibilité pour un client de réaliser une première inscription strictement confidentielle au cours de laquelle un numéro de carte de paiement est enregistré par le serveur. Cette première inscription permet au serveur de générer un certificat électronique à base de clés publiques de type X509, puis de transmettre au client ce certificat avec sa clé privée. Un mécanisme de signature électronique peut alors être utilisé pour des transactions ultérieures, afin que le serveur identifie et authentifie le client, puis réalise la transmission ou non du numéro de carte. Une telle méthode n'est pas adaptée pour l'obtention par un terminal radio mobile de certificats numériques depuis la carte puce (U) SIM ou WIM (Wireless Identity module).

De manière connue dans le domaine des radiocommunications, le centre d'authentification AUC assure l'authentification des abonnés et participe à la confidentialité des données transitant dans l'interface radio entre le terminal mobile et la station de base auquel il est rattaché à un instant donné.

Néanmoins, la solution susmentionnée n'est pas entièrement sûre. Ainsi, l'initialisation du processus d'authentification est un point faible car il y a beaucoup d'autorités de certification dont les politiques de certification n'ont absolument pas le même degré de sûreté. L'utilisateur lambda n'a pas connaissance de cela et ne sait pas par exemple qu'il peut être très risqué d'accepter des certificats certifiés par certaines autorités.

Le modèle Java/MIDP, introduit dans les terminaux de radiotéléphonie pour permettre l'utilisation d'applications téléchargeables via un réseau de radiocommunication, repose sur un protocole de sécurité tel que décrit précédemment. Dans le cadre de ce protocole, le terminal radio a la possibilité d'obtenir des certificats numériques depuis :
- la mémoire de masse du terminal radio mobile,
- la carte U (SIM)/WIM.

Les certificats contenus dans la mémoire de masse du téléphone mobile sont en général des certificats du fabricant et ceux contenus dans la carte U (SIM)/WIM des certificats de l'opérateur du réseau de radiotéléphonie et de tierces parties liées à l'opérateur.

Cependant le protocole possède une faille importante puisque l'architecture « terminal radio mobile+carte à puce » souffre d'une faiblesse de sécurité rendant possible l'utilisation de certificats numériques différents de ceux réellement mémorisés dans la carte à puce. En effet, la connexion électrique permettant les échanges entre le terminal et la carte à puce n'est protégée ni en confidentialité ni en intégrité. La possibilité d'insérer une tierce partie entre ces deux éléments pour intercepter les échanges et ainsi renvoyer des certificats numériques différents de ceux de la carte montre qu'il existe le besoin d'une solution d'authentification plus forte. La protection de contenu contre le piratage doit en effet être adaptée dans le cas où "l'attaquant" n'est pas extérieur, mais est typiquement l'utilisateur lui-même. Les solutions existantes ne prennent pas en compte cette possibilité.

Ainsi, le document US 2003/014629 décrit un système de gestion de certificats utilisant un serveur pour valider des certificats à la place du terminal utilisateur, de façon à minimiser les capacités de stockage du terminal. Ce mode de vérification n'est pas particulièrement adapté pour contrer le piratage au niveau d'un terminal avec carte à puce.

Il est prévu dans l'art antérieur, à cause des failles de sécurité, une politique de révocation de terminaux mobiles mais celle-ci est en pratique difficile à mettre en oeuvre.

Il est connu par le document US 2002/0098830 une méthode de vérification dans un terminal de l'authenticité de certificats émanant d'une autorité de certification, dans laquelle un module distinct de la carte SIM (Subscriber Identity Module) est incorporé dans le terminal de façon à permettre ladite vérification. Le second module dispose d'une mémoire sécurisée pour stocker des certificats d'origine servant à vérifier d'autres certificats. L'inconvénient de cette méthode est son coût pour l'utilisateur qui doit acquérir un terminal plus complexe et dont le coût de fabrication est nécessairement plus élevé.

Il existe donc un besoin pour un autre type de méthode permettant d'éviter qu'un attaquant puisse s'immiscer entre la carte à puce et le terminal radio lorsque le terminal demande à la carte de fournir les données de sécurité servant à juger de la pertinence d'une application.

### DESCRIPTION GENERALE DE L'INVENTION

La présente invention a donc pour objet de supprimer un ou plusieurs des inconvénients de l'art antérieur en définissant un procédé de vérification dans un terminal radio permettant d'authentifier de manière fortement sécurisée les certificats numériques lus à partir du module d'identité du terminal radio, en faisant intervenir un tiers de confiance pour confirmer la fiabilité du certificat lu par le terminal.

A cet effet, l'invention concerne un procédé de vérification dans un terminal radio de l'authenticité d'un certificat numérique stocké dans un module, comportant une étape de lecture par le terminal radio d'un certificat numérique stocké dans un module d'identité apte à communiquer avec ledit terminal radio, caractérisé en ce qu'il comprend :
- une étape de formation au moins de données signalétiques succinctes d'un certificat lu par le terminal radio, réalisée par des moyens de calcul du terminal radio ;
- une étape de signature électronique utilisant dans un premier temps des moyens de hashage du terminal radio pour former une première empreinte numérique notamment à partir des données signalétiques, puis dans un deuxième temps des moyens de chiffrement du terminal radio pour réaliser un chiffrement de cette première empreinte numérique de façon à obtenir une première empreinte numérique chiffrée constituant une signature du terminal radio ;
- une étape de transmission par le terminal radio, vers un serveur d'un réseau de radiotéléphonie mobile, de données de requête dans une requête de vérification incluant les données signalétiques représentatives du certificat lu et la signature du terminal radio ;
- une étape d'authentification du terminal radio utilisant la signature transmise et réalisée par le serveur puis, en cas de succès de l'étape d'authentification, une étape de vérification par le serveur de la correspondance des données signalétiques avec des données représentatives d'un certificat numérique reconnu valide et stockées dans une base de données du réseau ;
- une étape d'envoi depuis le serveur du réseau vers le terminal mobile de données de réponse incluant des données représentatives du résultat de la vérification.

Ainsi de manière avantageuse, l'invention utilise un serveur d'un réseau de radiotéléphonie permettant d'authentifier le terminal radio envoyant une requête avec des données signalétiques d'un certificat et de vérifier de manière sûre la validité du certificat numérique lu à partir du module d'identité.

Selon une autre particularité, un aléa servant d'identifiant de requête est déterminé lors d'une étape de calcul d'un nombre pseudo-aléatoire réalisée par les moyens de calcul du terminal radio, l'aléa étant ajouté aux données signalétiques lors d'une étape de formation de données de requête non signées.

Selon une autre particularité de l'invention, l'étape d'authentification du terminal radio réalisée par le serveur comprend :
- une étape de déchiffrement à l'aide d'une clé de ladite signature transmise par le terminal radio pour obtenir la première empreinte numérique ;
- une étape de détermination d'une seconde empreinte numérique à partir des données non signées transmises par le terminal radio par des moyens de hashage du serveur ; et
- une étape de comparaison entre la première et la seconde empreinte numérique pour valider l'authentification du terminal mobile.

Selon une autre particularité de l'invention, l'étape de formation de données signalétiques comprend la création d'une fiche signalétique requête incluant :
- un premier champ entier non signé indiquant la taille de la fiche signalétique ;
- un second champ entier non signé indiquant la version de spécification implémentée ;
- du hashcode de la valeur IssuerSubjectName pour l'autorité de certification du certificat ;
- du hashcode de la valeur Subject pour l'entité du certificat ;
- un numéro de série du certificat non signé ;
- du hascode de la structure DER ou analogue du certificat numérique ;
- de l'aléa du terminal radio ;
- du hashcode signé par un algorithme des champs ci-dessus, formant la première empreinte numérique chiffrée.

Selon une autre particularité, l'étape de signature électronique comprend une première étape utilisant lesdits moyens de hashage pour déterminer la première empreinte numérique représentative des données de requête non signées et une deuxième étape de chiffrement utilisant les moyens de chiffrement du terminal radio pour chiffrer à l'aide d'une clé la valeur numérique de ladite première empreinte numérique et pour ajouter la signature du terminal radio aux données de requête non signées.

Selon une autre particularité, l'étape de vérification est suivie d'une étape de rassemblement de données comprenant l'aléa envoyé par le terminal radio, un aléa supplémentaire déterminé par le serveur du réseau et les données représentatives du résultat de la vérification pour constituer les données de réponse.

Selon une autre particularité, l'étape d'envoi de données de réponse vers le terminal mobile est précédée d'une étape de signature électronique des données de réponse utilisant des moyens de hashage du serveur pour former une troisième empreinte numérique à partir des données de réponse rassemblées lors de l'étape de rassemblement et chiffrant cette troisième empreinte numérique avec une clé pour former la signature de réponse.

Selon une autre particularité, chaque valeur numérique de hashage est obtenue par déclenchement d'une fonction de hashage de type SHA, une clé de chiffrement stockée dans le terminal radio étant utilisée lors de l'étape de chiffrement pour chiffrer la valeur numérique après hashage formant la première empreinte numérique chiffrée.

Selon une autre particularité, l'étape de déchiffrement de la première empreinte numérique chiffrée dans le serveur est réalisée à l'aide d'une clé appairée à la clé du terminal radio.

Selon une autre particularité, une étape de traitement par le terminal radio des données de réponses envoyées par le serveur est réalisée par des moyens de hashage du terminal radio pour déterminer une quatrième empreinte numérique, et une étape de transmission au module d'identité par le terminal radio d'une requête de chiffrement de la quatrième empreinte numérique étant effectuée pour élaborer une signature de module.

Selon une autre particularité, le procédé selon l'invention comprend une étape de transmission de la signature de module au terminal radio, une étape de comparaison servant à l'authentification des données de réponse du serveur étant réalisée par un module de comparaison du terminal radio pour comparer la signature de module reçue par le terminal radio avec la signature de réponse du serveur.

Un autre objet de l'invention est de supprimer un ou plusieurs des inconvénients de l'art antérieur en définissant un système d'authentification permettant de fiabiliser la lecture par un terminal radio des certificats numériques contenus dans une carte à puce de type (U) SIM/WIM.

A cet effet, l'invention propose un système d'authentification d'un certificat numérique émanant d'une autorité de certification pour au moins un terminal radio contenant un module d'identité et apte à communiquer avec un réseau de radiotéléphonie mobile pour lui transmettre des données signalétiques représentatives d'un certificat numérique stocké dans le module d'identité, le terminal radio comportant des moyens de communiquer d'une part avec un serveur du réseau et d'autre part avec le module d'identité, le terminal radio et/ou le module d'identité comprenant en outre des moyens de hashage et de chiffrement agencés pour transformer respectivement des données déterminées en empreinte numérique puis en signature, ledit système étant caractérisé en ce qu'il comporte un serveur ayant accès à une base de données mémorisant une pluralité de certificats reconnus valides, le serveur comprenant :
- une unité de mémorisation et une unité de traitement permettant le traitement de requêtes d'authentification de certificat numérique ;
- des moyens de connexion au réseau reliés à l'unité de traitement, pour respectivement recevoir une requête de vérification d'un terminal radio du type incluant dans une première partie des données signalétiques représentatives d'un certificat et dans une seconde partie une empreinte numérique chiffrée correspondant aux données de la première partie, et transmettre à un terminal radio des données de réponse ;
- des moyens d'authentification d'un terminal radio agencés pour autoriser ou non la transmission par les moyens de connexion de données vers un terminal radio ;
- des moyens de vérification reliés à la base de données pour extraire d'une requête de vérification issue d'un terminal radio des données signalétiques représentatives d'un certificat et pour vérifier la correspondance de ces données signalétiques avec des données représentatives d'un certificat valide de la base de données, l'unité de traitement du serveur incorporant les moyens de vérification et étant agencée pour insérer dans les données de réponse le résultat de la vérification obtenu par les moyens de vérification.

Selon une autre particularité, le terminal radio comprend une unité de traitement incluant des moyens de lecture pour lire un certificat numérique stocké dans le module d'identité et des moyens de calcul pour calculer un nombre pseudo-aléatoire dit aléa servant d'identifiant de requête, l'unité de traitement du terminal radio étant agencée pour ajouter dans la première partie de la requête de vérification ledit aléa aux données signalétiques représentatives du certificat.

Selon une autre particularité, les moyens d'authentification comprennent :
- des moyens de hashage pour déterminer une empreinte numérique dite seconde empreinte numérique à partir de la première partie de la requête de vérification ;
- des moyens de déchiffrement pour obtenir une empreinte numérique dite première empreinte numérique à partir de l'empreinte numérique chiffrée de la seconde partie de la requête de vérification ;
- des moyens de comparaison pour comparer la première et la seconde empreinte numérique.

Selon une autre particularité, les moyens de vérification sont reliés à un module de calcul de l'unité de traitement du serveur permettant de comparer des codes de hashage contenus dans les données signalétiques de la première partie de la requête de vérification avec des codes de hashage de certificats numériques reconnus valides stockés dans la base de données.

Selon une autre particularité, l'unité de traitement du serveur comprend un module de calcul permettant de générer un aléa dit aléa du réseau et un module de rassemblement de données de réponse pour rassembler dans les données de réponse :
- l'aléa servant d'identifiant de requête ;
- l'aléa du réseau ;
- le résultat de la vérification obtenu par les moyens de vérification.

Selon une autre particularité, le serveur comprend dans l'unité de mémorisation des moyens de chiffrement, l'unité de traitement du serveur étant agencée pour associer lesdits moyens de chiffrement du serveur aux moyens de hashage du serveur pour établir une signature électronique des données de réponse et former ainsi une troisième empreinte numérique chiffrée.

Selon une autre particularité, les moyens de connexion du serveur sont agencés pour transmettre à un terminal radio des données de réponse complétées avec la troisième empreinte numérique chiffrée.

Selon une autre particularité, les moyens de hashage respectifs du terminal radio et du serveur sont conçus pour utiliser au moins une fonction de hashage de type SHA (Secure Hash Algorithm).

Selon une autre particularité, les moyens de chiffrement du terminal radio comprennent une clé de chiffrement et les moyens de déchiffrement du serveur comprennent une clé appairée à la clé du terminal radio.

Selon une autre particularité, le terminal radio comprend au moins une mémoire pour stocker les moyens de hashage et de chiffrement, l'unité de traitement du terminal radio étant agencée pour traiter les données de réponse du serveur en déclenchant les moyens de hashage stockés dans la mémoire, pour déterminer une quatrième empreinte numérique.

Selon une autre particularité, l'unité de traitement du terminal radio est reliée à une interface de communication avec le module d'identité et est apte transmettre au module d'identité via cette interface de communication une requête de chiffrement de la quatrième empreinte numérique, le module d'identité disposant de moyens de chiffrement pour fournir, en réponse à la requête de chiffrement, une quatrième empreinte numérique chiffrée.

Selon une autre particularité, les moyens de lecture sont reliés aux moyens de calcul dans l'unité de traitement du terminal radio pour permettre audits moyens de calcul de comparer la quatrième empreinte numérique chiffrée avec la troisième empreinte numérique chiffrée de façon à authentifier des données de réponse du serveur.

L'invention, avec ses caractéristiques et avantages, ressortira plus clairement à la lecture de la description faite en référence aux dessins annexés dans lesquels :
- la figure 1 représente un logigramme des étapes du procédé dans un mode de réalisation de l'invention ;
- la figure 2 représente un schéma fonctionnel du système d'authentification selon un mode de réalisation de l'invention ;
- la figure 3 représente schématiquement les étapes conduisant à la transmission par le terminal radio d'une requête de vérification vers un réseau de radiotéléphonie ;
- la figure 4 représente schématiquement les étapes conduisant à la transmission de données de réponse au terminal radio réalisées via un serveur du réseau de radiotéléphonie ;
- les figures 5A et 5B illustrent respectivement un exemple de fiche signalétique requête envoyée par le terminal radio et un exemple de fiche signalétique réponse envoyé par le serveur du réseau de radiotéléphonie ;
- la figure 6 représente dans un tableau un exemple de contenu d'un certificat du type X509.

### DESCRIPTION DES MODES DE REALISATION PREFERES DE L'INVENTION

Bien que la présente invention, décrit des modes de réalisation utilisant un terminal radio (MS) dans un réseau de type GSM, il doit être compris que le procédé est adapté à d'autres types de réseau radio ou analogue, par exemple WLAN. Les réseaux radio AMPS, TMDA, CDM, TACS, PDC, HSCSD, GPRS, EDGE ou UMTS, supportant ou non le protocole de transmission par paquets WAP (Wireless Application Protocol), peuvent être utilisés pour l'invention.

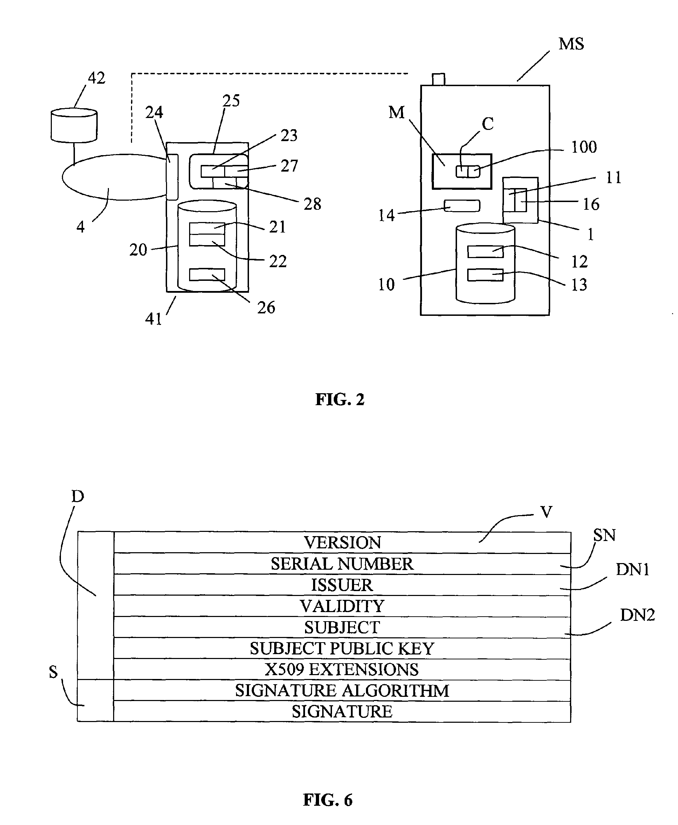

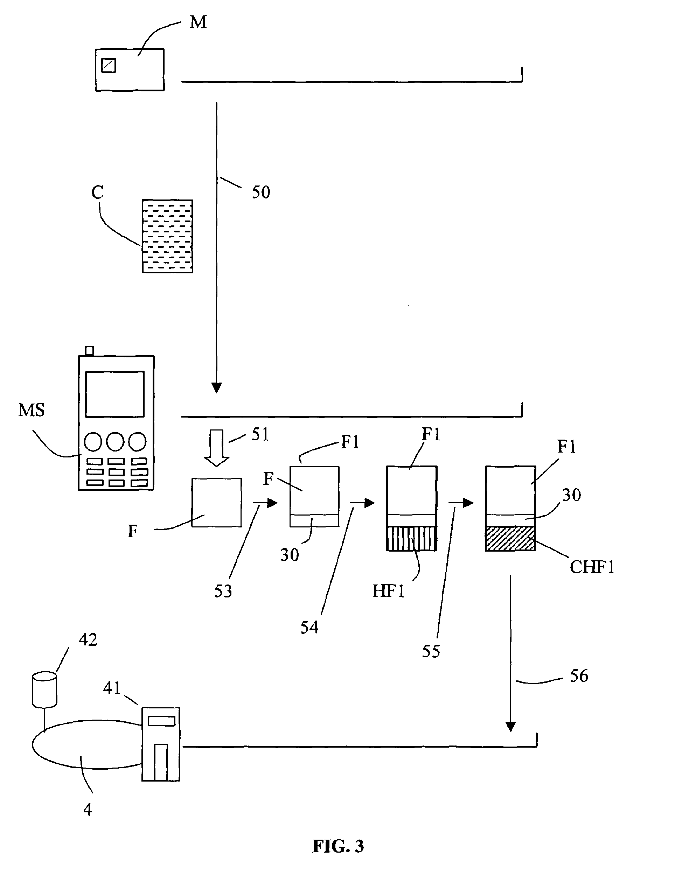

L'invention va être à présent décrite en référence aux figures 2 et 3.

Le terminal mobile (MS) représenté à la figure 2 peut être un téléphone portable d'un type classique GSM ou un appareil de communication analogue nécessitant un module d'identification (M) de l'utilisateur pour fonctionner. Ce module d'identification peut consister par exemple en une carte à puce de type (U)SIM ou WIM. Dans le mode de réalisation préféré de l'invention, le module d'identification (M) est incorporable dans le corps du terminal mobile (MS). L'utilisateur du terminal mobile (MS) est généralement abonné à un opérateur gérant un réseau de télécommunication (4).

Dans le mode de réalisation de la figure 2, le serveur (41) est un serveur sécurisé connecté à un réseau (4) de radiotéléphonie. Le serveur (41) est par exemple du type OTA ("over the air") pour constituer un système de communication de confiance. Le système d'authentification selon l'invention permet notamment, pour un ou plusieurs terminaux radio (MS), de s'assurer de l'origine de la validité d'un certificat numérique (C) émanant d'une autorité de certification. Plus spécifiquement, le système envisagé permet de fournir une solution forte d'authentification de certificats numériques (C), par exemple de type X509, lus par le terminal radio (MS) depuis un fichier d'une carte à puce ou module d'identité (M), en réalisant l'authentification à l'aide du serveur (41).

Le terminal radio (MS) comporte de façon classique des moyens de communication avec le réseau (4) pour échanger des données. Il comprend ainsi des moyens de communiquer d'une part avec un serveur (41) du réseau (4) et d'autre part avec le module d'identité (M). Le terminal radio (MS) peut donc transmettre des données signalétiques (F) représentatives d'un certificat numérique (C) stocké dans le module d'identité (M). Dans un mode de réalisation préféré de l'invention, le terminal radio (MS) comporte des moyens de hashage (12) et de chiffrement (13) agencés pour transformer des données déterminées en empreinte numérique chiffrée. Le module d'identité peut également être doté de moyens analogue permettant le hashage de données et le chiffrement de données. En référence avec la figure 2, le terminal radio (MS) comprend au moins une mémoire (10) pour stocker ces moyens de hashage (12) et de chiffrement (13). Le terminal radio (MS) comprend une unité de traitement (1) incluant des moyens de lecture (16) permettant notamment de lire un certificat numérique (C) stocké dans le module d'identité (M). L'unité de traitement (1) du terminal radio (MS) est reliée à l'interface de communication (14) avec le module d'identité (M). Cette interface (14) correspond par exemple à une interface de connexion physique avec un circuit intégré du module d'identité (M). L'unité de traitement (1) du terminal radio (MS) est agencée pour formuler une requête de vérification d'un tel certificat numérique (C). Une telle requête de vérification peut comporter, comme illustré à la figure 3, des données signalétiques (F) représentatives du certificat (C) dans une première partie et dans une seconde partie une empreinte numérique chiffrée (CHF1) correspondant aux données de la première partie.

Dans un mode de réalisation, le terminal radio (MS) dispose de moyens de calcul (11) dans l'unité de traitement (1) pour calculer un nombre pseudo-aléatoire dit aléa (30) servant par exemple d'identifiant de requête. L'unité de traitement (1) permet d'ajouter ledit aléa (30) aux données signalétiques (F) représentatives du certificat (C), dans la première partie de la requête de vérification. Comme illustré à la figure 3, l'aléa (30) peut être ajouté aux données signalétiques (F) pour former des données de requête non signées (F1). Les moyens de hashage (12) du terminal radio (MS) sont utilisés par l'unité de traitement (1) pour déterminer une valeur numérique de hashage représentative des données de requête non signées (F1). Cette valeur numérique de hashage forme une première empreinte numérique (HF1). Le chiffrement de cette première empreinte numérique (HF1) par les moyens de chiffrement (13) du terminal radio (MS) permet d'obtenir une première empreinte numérique chiffrée (CHF1), qui peut être ajoutée aux données de requête non signées (F1) comme illustré à la figure 3. Ainsi les données supplémentaires signées correspondant à cette empreinte numérique chiffrée (CHF1) peuvent constituer la seconde partie de la requête de vérification pour le certificat numérique (C). Autrement dit, l'empreinte numérique chiffrée (CHF1) constitue la signature du terminal radio (MS).

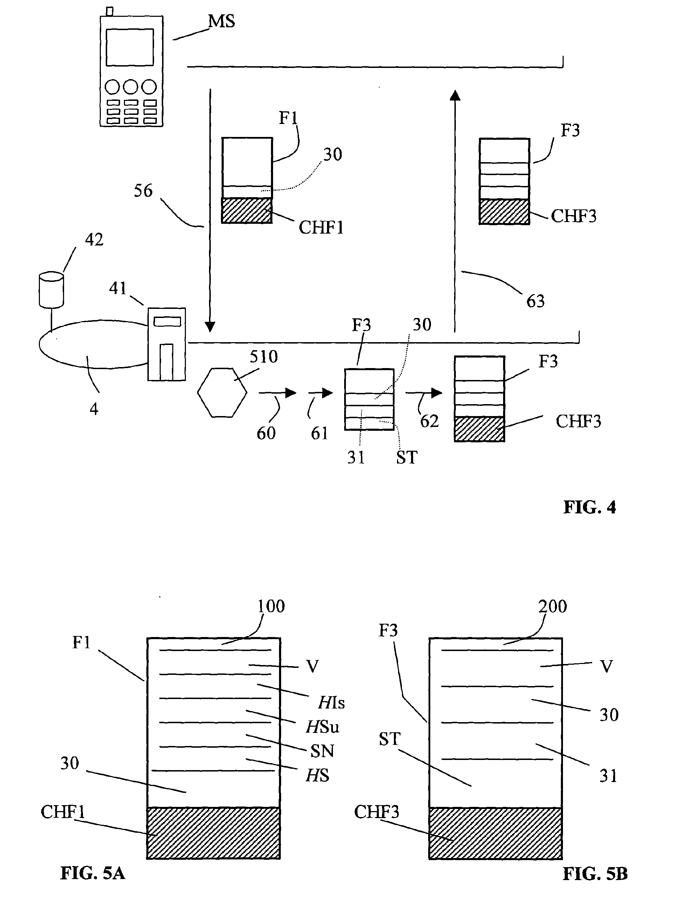

L'invention va être à présent décrite en référence aux figures 2 et 4.

Le système d'authentification selon l'invention comporte avantageusement un serveur (41) ayant accès à une base de données (42) mémorisant une pluralité de certificats reconnus valides. Comme représenté à la figure 2, le serveur (41) comprend une unité de mémorisation (20), une unité de traitement (25) et des moyens de connexion (24) au réseau (4) de radiotéléphonie mobile, par exemple GSM. Ces moyens de connexion (24), reliés à l'unité de traitement (25), permettent respectivement de recevoir une requête de vérification d'un terminal radio (MS) du type incluant dans une première partie des données signalétiques (F) représentatives d'un certificat (C) et dans une seconde partie une empreinte numérique chiffrée (CHF1) correspondant aux données de la première partie, et transmettre à ce terminal radio (MS) des données de réponse à la requête envoyée. Dans le mode de réalisation de la figure 4, le serveur (41) reçoit les données de requête non signées (F1) incluant l'aléa (30) et les données supplémentaires formant la première empreinte numérique chiffrée (CHF1).

Le serveur (41) est doté de moyens d'authentification pour authentifier le terminal radio (MS) ayant envoyé la requête de vérification. Ces moyens d'authentification sont agencés pour autoriser ou non la transmission de données par les moyens de connexion (24) vers le terminal radio (MS). En référence avec la figure 2, les moyens d'authentification du serveur (41) comprennent des moyens de hashage (26) et des moyens de déchiffrement (21), par exemple stockés dans l'unité de mémorisation (20). Les moyens de hashage (26) sont utilisés pour déterminer une empreinte numérique dite seconde empreinte numérique (HF2) à partir de la première partie de la requête de vérification, tandis que les moyens de déchiffrement (21) permettent d'obtenir une empreinte numérique dite première empreinte numérique (HF1) à partir de l'empreinte numérique chiffrée (CHF1) de la seconde partie de la requête de vérification. Les moyens d'authentification dont dispose le serveur (41) comportent en outre des moyens de comparaison (27) dans l'unité de traitement (20) pour comparer la première (HF1) et la seconde empreinte numérique (HF2). Si la comparaison entre la valeur déchiffrée formant la première empreinte (HF1) et la valeur calculée par les moyens de hashage (26) formant la seconde empreinte numérique (HF2) révèle une différence, alors aucune réponse du serveur (41) n'est envoyée au terminal radio (MS). Dans une variante, un message de réponse, par exemple sous la forme d'un message court ou analogue, peut être renvoyé pour signifier au terminal radio (MS) qu'il n'est pas authentifié. Si la comparaison constate l'égalité des valeurs, alors le terminal radio (MS) est authentifié et la vérification de l'authenticité du certificat numérique (C) peut être réalisée.

L'unité de traitement (25) du serveur (41) incorpore des moyens de vérification (23) permettant de contrôler l'authenticité du certificat numérique (C) lu à partir du module d'identité (M) d'un terminal radio (MS) authentifié. L'unité de traitement (25) comprend en outre un module de calcul (non représenté) permettant de générer un aléa (31). Dans un mode de réalisation de l'invention, l'unité de traitement (25) est agencée pour insérer dans les données de réponse le résultat de la vérification (ST) obtenu par les moyens de vérification (23). Pour cela, l'unité de traitement (25) dispose d'un module de rassemblement (28) de données de réponse pour rassembler dans les données de réponse (F3) :
- l'aléa (30) généré servant d'identifiant de requête généré dans le terminal radio (MS) ;
- l'aléa (31) du réseau ;
- le résultat de la vérification (ST) obtenu par les moyens de vérification (23).

Les moyens de vérification (23) sont reliés à la base de données (42) pour, d'une part extraire d'une requête de vérification issue du terminal radio (MS) les données signalétiques (F) représentatives du certificat (C), et d'autre part vérifier la correspondance de ces données signalétiques (F) avec des données représentatives d'un certificat valide de la base de données (42). Les moyens de vérification (23) peuvent être reliés au module de calcul de l'unité de traitement (25) du serveur (41), le module de calcul permettant de comparer des codes de hashage du certificat (C) contenus dans les données signalétiques (F) de la première partie de la requête de vérification avec des codes de hashage de certificats numériques reconnus valides stockés dans la base de données (42).

Dans le mode de réalisation de la figure 2, le serveur (41) comprend dans l'unité de mémorisation (20) des moyens de chiffrement (22), par exemple avec une clé, pour former la signature de réponse. L'unité de traitement (25) du serveur (41) est agencée pour associer ces moyens de chiffrement (22) aux moyens de hashage (26) du serveur (41) pour établir une signature électronique des données de réponse (F3) et former ainsi une troisième empreinte numérique chiffrée (CHF3). Comme illustré à la figure 4, les moyens de connexion (24) du serveur (41) sont agencés pour transmettre au terminal radio (MS) les données de réponse (F3) complétées avec la troisième empreinte numérique chiffrée (CHF3).

L'invention va être à présent décrite en référence aux figures 5A, 5B et 6.

La figure 5A expose sous la forme d'une fiche signalétique requête un exemple de données contenues dans la requête de vérification envoyée par le terminal radio (MS). Comme représenté à la figure 6, un certificat numérique de type suivant la norme X509 ou tout autre type de certificat numérique comporte une structure, par exemple binaire de type DER (type d'extension pour les fichiers de certificat) ou tout autre forme de codage, et comporte des données (D) représentatives de la version (V) de spécification du certificat, du numéro de série (SN) du certificat, de l'autorité de certification (DN1), de dates de validité (création et péremption), de l'entité (DN2) du certificat (C), de la clé publique de l'entité, des extensions X509 ainsi que des données de signature (S) correspondant à l'algorithme de signature et à la signature.

Dans le mode de réalisation de la figure 5A, l'implémentation pour la fiche signalétique requête prévoit, de manière non limitative, la composition suivante :
- un premier champ entier non signé indiquant la taille (100) de la fiche signalétique,
- un second champ entier non signé indiquant la version (V) de spécification implémentée,
- du hashcode SHA-1 (SHA pour Secure Hash Algorithm) de la valeur IssuerSubjectName (Hls) pour l'autorité de certification du certificat (C) avec des champs prévus notamment pour l'organisation O, l'unité de l'organisation OU, le pays C et le nom/prénom CN de l'autorité de certification,
- du hashcode SHA-1 (HSu) de la valeur Subject pour l'entité du certificat (C) avec des champs prévus notamment pour l'organisation O, l'unité de l'organisation OU, le pays C et le nom/prénom CN de l'entité,
- un numéro de série (SN) du certificat non signé,
- du hascode SHA-1 (HS) de la structure DER ou analogue du certificat numérique (C),
- de l'aléa (30) du terminal radio (MS),
- du hashcode SHA-1 signé par un algorithme, par exemple A3/A8, des champs ci-dessus, formant la première empreinte numérique chiffrée (CHF1).

La fonction de hashage de la fiche signalétique requête est par exemple SHA-1 ou une fonction équivalente. En variante, une fonction de type MD5 (Message Digest) peut aussi être utilisée. Les valeurs numériques sont codées selon l'ordre souhaité pour une communication à travers un réseau de type GSM ou analogue, en "network byte order". Les premier et second champs sont par exemple codés sur 16 bits, la version de spécification étant indiquée par 4 bits de poids faible de façon à réserver des bits de poids fort pour d'autres usages. Les hascodes relatifs à l'autorité de certification et à l'entité du certificat (C) se présentent par exemple chacun dans un codage de caractères du type format UTF-8 sans le caractère de terminaison. Le numéro de série (SN) peut être codé sur 32 bits, la taille de la fiche signalétique étant par exemple de 82 octets.

En référence à la figure 5B, une fiche signalétique réponse, envoyée par le serveur (41) au terminal radio (MS) ayant émis la requête, peut être composée comme suit avec :
- un premier champ entier non signé indiquant la taille (200) de la fiche signalétique,
- un second champ entier non signé indiquant la version (V) de spécification implémentée,
- un troisième champ entier non signé reprenant l'aléa (30) envoyé par le termina radio (MS),
- un quatrième champ entier non signé, analogue au troisième champ, indiquant l'aléa (31) créé par le serveur (41),
- un cinquième champ indiquant le résultat de la vérification (ST) sur le statut du certificat (C),
- du hashcode SHA-1 signé par un algorithme, par exemple A3/A8, des champs ci-dessus, formant la troisième empreinte numérique chiffrée (CHF3).

Le résultat de la vérification (ST) peut être représenté par quatre valeurs différentes : une première valeur pour signifier que le certificat (C) est connu de l'opérateur gérant le réseau (4) et valide, une seconde valeur pour signifier que la vérification est impossible du fait de l'indisponibilité du réseau (4), une troisième valeur pour signifier que le certificat est inconnu de l'opérateur et une quatrième valeur pour signifier que le certificat est connu mais révoqué par l'opérateur.

Dans un mode de réalisation de l'invention, les moyens de hashage respectifs (12, 26) du terminal radio (MS) et du serveur (41) sont conçus pour utiliser au moins une fonction de hashage de type SHA ou analogue. Les moyens de chiffrement (13) du terminal radio (MS) comprennent une clé de chiffrement et les moyens de déchiffrement (21) du serveur (41) comprennent une clé appairée à la clé du terminal radio (MS). De manière non limitative, les clés sont par exemple asymétriques (une clé publique eu niveau du serveur et une clé privée dans le terminal radio) ou alternativement symétriques.

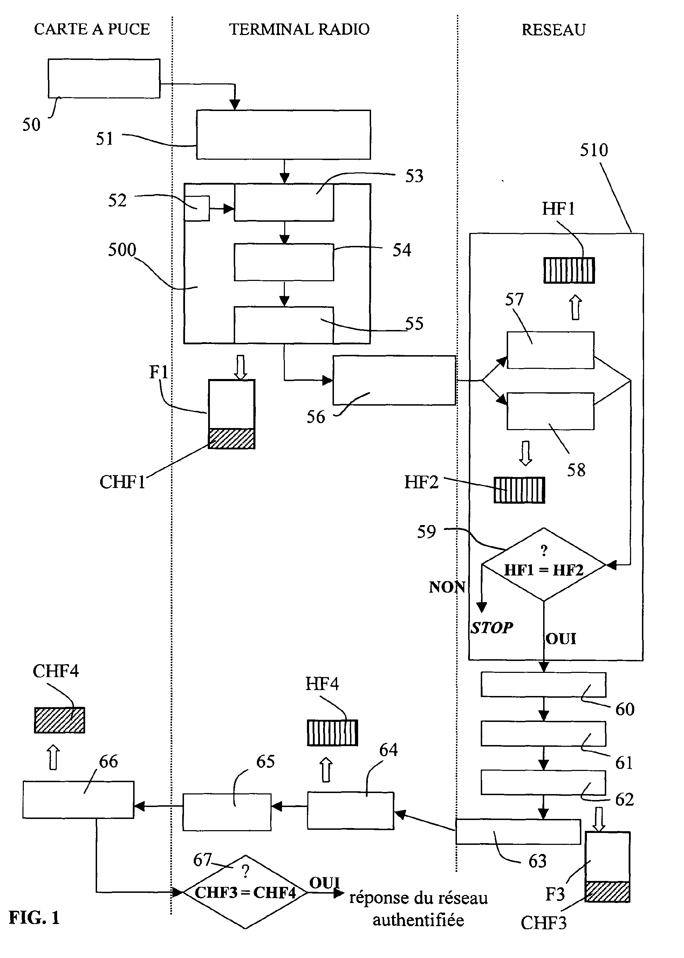

Le procédé de vérification de l'authenticité de certificats numériques va être à présent être décrit en référence aux figures 1 à 4.

Comme illustré à la figure 1, le processus selon l'invention débute par une étape (50) de lecture par le terminal radio (MS) d'un certificat numérique (C) stocké dans une mémoire du circuit intégré du module d'identité (M). Le terminal radio (MS) réalise ensuite par ses moyens de calcul (11) une étape (51) de formation notamment de données signalétiques (F) succinctes représentatives du certificat (C) venant d'être lu. Une étape (500) de signature électronique pour former une première empreinte numérique chiffrée (CHF1) est ensuite réalisée en deux temps en partant notamment des données signalétiques (F). Le terminal radio (MS) utilise pour cela des moyens de hashage (12) et de chiffrement (13) à sa disposition.

Dans le mode de réalisation de la figure 1, l'étape (500) de signature électronique se décompose en une étape préalable (52) de calcul de l'aléa (30) suivie d'une étape (53) de formation de données de requête non signées (F1) au cours de laquelle l'aléa (30) est ajouté aux données signalétiques (F). Il s'ensuit l'étape (54) utilisant lesdits moyens de hashage pour déterminer la première empreinte numérique (HF1) représentative des données de requête non signées (F1) puis l'étape (55) de chiffrement utilisant les moyens de chiffrement du terminal radio (MS) pour chiffrer à l'aide d'une clé la valeur numérique de ladite première empreinte numérique (HF1) et permettre l'ajout de ladite première empreinte numérique chiffrée (CHF1) aux données de requête non signées (F1).

L'étape (500) de signature électronique est alors suivie d'une étape (56) de transmission par le terminal radio (MS) au serveur (41) de données de requête inclues une requête de vérification. Le serveur (41) réceptionne cette requête et authentifie aussitôt lors d'une étape (510) d'authentification le terminal radio (MS). Dans le mode de réalisation de la figure 1, cette étape (510) d'authentification comprend, en parallèle ou non dans le serveur (41), une étape (57) de déchiffrement de la première empreinte numérique chiffrée (CHF1) à l'aide d'une clé et une étape (58) de détermination d'une seconde empreinte numérique (HF2) à partir des données non signées (F1). L'étape d'authentification (510) se termine par une étape (59) de comparaison entre la première (HF1) et la seconde empreinte numérique (HF2) pour valider l'authentification du terminal mobile (MS).

Comme représenté à la figure 1, en cas de succès lors de l'étape (59) de comparaison, une étape (60) de vérification est réalisée par le serveur (41) pour vérifier si les données signalétiques (F) correspondent à des données représentatives d'un certificat numérique reconnu valide pour le réseau (4). Cette étape (60) de vérification est suivie d'une étape (61) de rassemblement de données de réponse (F3) comprenant notamment l'aléa (30) envoyé par le terminal radio (MS), l'aléa supplémentaire (31) déterminé par le serveur (41) et les données représentatives du résultat de la vérification (ST). Une étape (62) de signature électronique est réalisée par les moyens de hashage (26) et de chiffrement (22) du serveur (41) pour former une troisième empreinte numérique chiffrée (CHF3) à partir de ces données de réponse (F3). Ces dernières sont envoyées avec la troisième empreinte numérique chiffrée (CHF3) au terminal radio (MS) lors de l'étape (63) d'envoi de données (F3, CHF3) au terminal (MS).

Dans un mode de réalisation préféré de l'invention, l'unité de traitement (1) du terminal radio (MS) est agencée pour traiter les données de réponse (F3) du serveur (41) en déclenchant les moyens de hashage (12) stockés dans la mémoire (10). Comme représenté à la figure 1, une étape (64) de traitement des données de réponses (F3) envoyées par le serveur (41) est ainsi réalisée par utilisation de ces moyens de hashage (12), pour déterminer une quatrième empreinte numérique (HF4). Le terminal radio (MS) transmet en outre une requête de chiffrement de la quatrième empreinte numérique (HF4) au module d'identité (M). L'étape (65) de transmission de cette requête de chiffrement est initiée par l'unité de traitement (1) qui transmet cette requête via l'interface de communication (14) au module d'identité (M). Il s'ensuit un chiffrement de la quatrième empreinte numérique (HF4) réalisée par des moyens de chiffrement (100) du module d'identité (M). Ce chiffrement correspond à une signature par le module d'identité (M). Il peut ainsi être effectuée , en réponse à la requête de chiffrement, une étape (66) de transmission au terminal radio (MS) de la signature de module constituée par la quatrième empreinte numérique chiffrée (CHF4).

Une étape de comparaison (67) servant à l'authentification des données de réponse (F3) du serveur (41) peut ensuite être réalisée par un module de comparaison (15) du terminal radio (MS), comme représenté à la figure 1, pour comparer la quatrième empreinte numérique chiffrée (CHF4) avec la troisième empreinte numérique chiffrée (CHF3) fournie par le serveur (41). En référence avec la figure 2, les moyens de lecture (16) sont par exemple reliés aux moyens de calcul (11) dans l'unité de traitement (1) du terminal radio (MS) pour permettre à ces moyens de calcul (11) de comparer la quatrième empreinte numérique chiffrée (CHF4) avec la troisième empreinte numérique chiffrée (CHF3). Ainsi, le processus proposé dans la présente invention permet de s'assurer que le certificat fourni est valide provient bien du module d'identité (M).

Si le serveur (41) envoie une réponse au terminal radio (MS) signalant l'invalidité du certificat du module d'identité, par exemple à la suite d'une révocation de l'opérateur du réseau (4), le terminal radio (MS) peut alors mémoriser dans une mémoire interne le fait que le certificat (C) du module (M) n'est pas valide. A chaque fois, qu'une demande de certificat sera effectuée, l'unité de traitement (1) du terminal radio (MS) pourra procéder à une vérification préalable que le certificat en question ne fait pas partie d'une liste noire de certificats révoqués.

L'un des avantages de l'invention réside dans son adaptabilité à tout type de terminal radio (MS) pour contrôler, par authentification des certificats numériques (C), l'intégrité des données lues depuis la carte à puce. Il est ainsi permis d'empêcher l'utilisation par le terminal radio (MS) d'applications dont le certificat est corrompu (la clé ayant été volée par exemple).

L'invention permet avantageusement de fiabiliser la lecture par un téléphone mobile des certificats numériques (C) contenus dans une carte à puce de type (U) SIM OU WIM, en rendant possible la détection systématique d'une attaque par le milieu.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de vérification dans un terminal radio (MS) de l'authenticité d'un certificat numérique (C) stocké dans un module, comportant une étape (50) de lecture par le terminal radio (MS) d'un certificat numérique (C) stocké dans un module d'identité (M) apte à communiquer avec ledit terminal radio (MS), **caractérisé en ce qu'**il comprend :
- une étape (51) de formation au moins de données signalétiques (F) succinctes d'un certificat (C) lu par le terminal radio (MS), réalisée par des moyens de calcul (11) du terminal radio (MS) ;
- une étape (500) de signature électronique utilisant dans un premier temps des moyens de hashage (12) du terminal radio (MS) pour former une première empreinte numérique (HF1) notamment à partir des données signalétiques (F), puis dans un deuxième temps des moyens de chiffrement (13) du terminal radio (MS) pour réaliser un chiffrement de cette première empreinte numérique (HF1) de façon à obtenir une première empreinte numérique chiffrée (CHF1) constituant une signature du terminal radio (MS) ;
- une étape (56) de transmission par le terminal radio (MS), vers un serveur (41) d'un réseau (4) de radiotéléphonie mobile, de données de requête dans une requête de vérification incluant les données signalétiques (F) représentatives du certificat lu (C1) et la signature du terminal radio (MS) ;
- une étape (510) d'authentification du terminal radio (MS) utilisant la signature transmise et réalisée par le serveur (41) puis, en cas de succès de l'étape (510) d'authentification, une étape (60) de vérification par le serveur (41) de la correspondance des données signalétiques (F) avec des données représentatives d'un certificat numérique reconnu valide et stockées dans une base de données (42) du réseau (4) ;
- une étape (63) d'envoi depuis le serveur (41) du réseau vers le terminal mobile (MS) de données de réponse (F3) incluant des données représentatives du résultat de la vérification (ST).

2. Procédé selon la revendication 1, dans lequel un aléa (30) servant d'identifiant de requête est déterminé lors d'une étape (52) de calcul d'un nombre pseudo-aléatoire réalisée par les moyens de calcul (11) du terminal radio (MS), l'aléa (30) étant ajouté aux données signalétiques (F) lors d'une étape (53) de formation de données de requête non signées (F1).

3. Procédé selon la revendication 2, dans lequel l'étape (510) d'authentification du terminal radio (MS) réalisée par le serveur (41) comprend :
- une étape (57) de déchiffrement à l'aide d'une clé de ladite signature transmise par le terminal radio (MS) pour obtenir la première empreinte numérique (HF1) ;
- une étape (58) de détermination d'une seconde empreinte numérique (HF2) à partir des données non signées (F1) transmises par le terminal radio (MS) par des moyens de hashage (26) du serveur (41) ; et
- une étape (59) de comparaison entre la première (HF1) et la seconde empreinte numérique (HF2) pour valider l'authentification du terminal mobile (MS).

4. Procédé selon l'une des revendications 1 à 3, dans lequel l'étape de formation de données signalétiques comprend la création d'une fiche signalétique requête incluant :
- un premier champ entier non signé indiquant la taille (100) de la fiche signalétique ;
- un second champ entier non signé indiquant la version (V) de spécification implémentée ;
- du hashcode (Hls) de la valeur IssuerSubjectName pour l'autorité de certification du certificat (C) ;
- du hashcode (HSu) de la valeur Subject pour l'entité du certificat (C) ;
- un numéro de série (SN) du certificat non signé,
- du hascode (HS) de la structure DER ou analogue du certificat numérique (C),
- de l'aléa (30) du terminal radio (MS),
- du hashcode signé par un algorithme des champs ci-dessus, formant la première empreinte numérique chiffrée (CHF1).

5. Procédé selon l'une des revendications 2 à 4, dans lequel l'étape (500) de signature électronique pour former la première empreinte numérique chiffrée (CHF1) comprend une première étape (54) utilisant lesdits moyens de hashage (12) pour déterminer la première empreinte numérique (HF1) représentative des données de requête non signées (F1) et une deuxième étape (55) de chiffrement utilisant les moyens de chiffrement (13) du terminal radio (MS) pour chiffrer à l'aide d'une clé la valeur numérique de ladite première empreinte numérique (HF1) et pour ajouter la signature du terminal radio (MS) aux données de requête non signées (F1).

6. Procédé selon l'une quelconque des revendications 2 à 5, dans lequel l'étape (60) de vérification est suivie d'une étape (61) de rassemblement de données comprenant l'aléa (30) envoyé par le terminal radio (MS), un aléa supplémentaire (31) déterminé par le serveur (41) du réseau (4) et les données représentatives du résultat de la vérification (ST) pour constituer les données de réponse (F3).

7. Procédé selon la revendication 6, dans lequel l'étape (63) d'envoi de données de réponse (F3) vers le terminal mobile (MS) est précédée d'une étape (62) de signature électronique des données de réponse, utilisant des moyens de hashage (26) du serveur (41) pour former une troisième empreinte numérique (HF3) à partir des données de réponse (F3) rassemblées lors de l'étape (61) de rassemblement, et chiffrant cette troisième empreinte numérique (HF3) avec une clé pour former la signature de réponse.

8. Procédé selon l'une des revendications 5 à 7, dans lequel chaque valeur numérique de hashage est obtenue par déclenchement d'une fonction de hashage de type SHA, une clé de chiffrement stockée dans le terminal radio (MS) étant utilisée lors de l'étape (55) de chiffrement pour chiffrer la valeur numérique après hashage formant la première empreinte numérique chiffrée (CHF1).

9. Procédé selon la revendication 8, dans lequel l'étape (57) de déchiffrement de la première empreinte numérique chiffrée (CHF1) dans le serveur (41) est réalisée à l'aide d'une clé appairée à la clé du terminal radio (MS).

10. Procédé selon l'une quelconque des revendications 6 à 9, dans lequel une étape (64) de traitement par le terminal radio (MS) des données de réponses (F3) envoyées par le serveur (41) est réalisée par des moyens de hashage (12) du terminal radio (MS) pour déterminer une quatrième empreinte numérique (HF4), une étape (65) de transmission au module d'identité (M) par le terminal radio (MS) d'une requête de chiffrement de la quatrième empreinte numérique (HF4) étant effectuée pour élaborer une signature de module.

11. Procédé selon la revendication 10, **caractérisé en ce qu'**il comprend une étape (66) de transmission de la signature de module au terminal radio (MS), une étape (67) de comparaison servant à l'authentification des données de réponse (F3) du serveur (41) étant réalisée par un module de comparaison (15) du terminal radio (MS) pour comparer la signature de module reçue par le terminal radio (MS) avec la signature de réponse du serveur (41).

12. Système d'authentification d'un certificat numérique (C) émanant d'une autorité de certification pour au moins un terminal radio (MS) contenant un module d'identité (M) et apte à communiquer avec un réseau de radiotéléphonie mobile (4) pour lui transmettre des données signalétiques (F) représentatives d'un certificat numérique (C) stocké dans le module d'identité (M), le terminal radio (MS) comportant des moyens de communiquer d'une part avec un serveur (41) du réseau (4) et d'autre part avec le module d'identité (M), le terminal radio (MS) et/ou le module d'identité (M) comprenant en outre des moyens de hashage (12) et de chiffrement (13) agencés pour transformer respectivement des données déterminées en empreinte numérique puis en signature, ledit système étant **caractérisé en ce qu'**il comporte un serveur (41) ayant accès à une base de données (42) mémorisant une pluralité de certificats reconnus valides, le serveur (41) comprenant :
- une unité de mémorisation (20) et une unité de traitement (25) permettant le traitement de requêtes d'authentification de certificat numérique (C) ;
- des moyens de connexion (24) au réseau (4) reliés à l'unité de traitement (25), pour respectivement recevoir une requête de vérification d'un terminal radio (MS) du type incluant dans une première partie des données signalétiques (F) représentatives d'un certificat (C) et dans une seconde partie une empreinte numérique chiffrée (CHF1) correspondant aux données de la première partie, et transmettre à un terminal radio (MS) des données de réponse ;
- des moyens d'authentification d'un terminal radio (MS) agencés pour autoriser ou non la transmission par les moyens de connexion (24) de données vers un terminal radio (MS) ;
- des moyens de vérification (23) reliés à la base de données (42) pour extraire d'une requête de vérification issue d'un terminal radio (MS) des données signalétiques (F) représentatives d'un certificat (C) et pour vérifier la correspondance de ces données signalétiques (F) avec des données représentatives d'un certificat valide de la base de données (42), l'unité de traitement (25) du serveur (41) incorporant les moyens de vérification (23) et étant agencée pour insérer dans les données de réponse le résultat de la vérification (ST) obtenu par les moyens de vérification (23).

13. Système d'authentification selon la revendication 12, dans lequel le terminal radio (MS) comprend une unité de traitement (1) incluant des moyens de lecture (16) pour lire un certificat numérique (C) stocké dans le module d'identité (M) et des moyens de calcul (11) pour calculer un nombre pseudo-aléatoire dit aléa (30) servant d'identifiant de requête, l'unité de traitement (1) du terminal radio (MS) étant agencée pour ajouter dans la première partie de la requête de vérification ledit aléa (30) aux données signalétiques (F) représentatives du certificat (C).

14. Système d'authentification selon la revendication 12 ou 13, dans lequel les moyens d'authentification comprennent :
- des moyens de hashage (26) pour déterminer une empreinte numérique dite seconde empreinte numérique (HF2) à partir de la première partie de la requête de vérification ;
- des moyens de déchiffrement (21) pour obtenir une empreinte numérique dite première empreinte numérique (HF1) à partir de l'empreinte numérique chiffrée (CHF1) de la seconde partie de la requête de vérification ;
- des moyens de comparaison (27) pour comparer la première (HF1) et la seconde empreinte numérique (HF2).

15. Système d'authentification selon l'une des revendications 12 à 14, dans lequel les moyens de vérification (23) sont reliés à un module de calcul de l'unité de traitement (25) du serveur (41) permettant de comparer des codes de hashage contenus dans les données signalétiques (F) de la première partie de la requête de vérification avec des codes de hashage de certificats numériques reconnus valides stockés dans la base de données (42).

16. Système d'authentification selon l'une des revendications 13 à 15, dans lequel l'unité de traitement (25) du serveur (41) comprend un module de calcul permettant de générer un aléa dit aléa du réseau (31) et un module de rassemblement (28) de données de réponse pour rassembler dans les données de réponse (F3) :
- l'aléa (30) servant d'identifiant de requête ;
- l'aléa (31) du réseau ;
- le résultat de la vérification (ST) obtenu par les moyens de vérification (23).

17. Système d'authentification selon la revendication 16, dans lequel le serveur (41) comprend dans l'unité de mémorisation (20) des moyens de chiffrement (22), l'unité de traitement (25) du serveur (41) étant agencée pour associer lesdits moyens de chiffrement (22) du serveur (41) aux moyens de hashage (26) du serveur (41) pour établir une signature électronique des données de réponse (F3) et former ainsi une troisième empreinte numérique chiffrée (CHF3).

18. Système d'authentification selon la revendication 17, dans lequel les moyens de connexion (24) du serveur (41) sont agencés pour transmettre à un terminal radio (MS) des données de réponse (F3) complétées avec la troisième empreinte numérique chiffrée (CHF3).

19. Système d'authentification selon l'une des revendications 14 à 18, dans lequel les moyens de hashage respectifs (12, 26) du terminal radio (MS) et du serveur (41) sont conçus pour utiliser au moins une fonction de hashage de type SHA.

20. Système d'authentification selon l'une des revendications 14 à 19, dans lequel les moyens de chiffrement (13) du terminal radio (MS) comprennent une clé de chiffrement et les moyens de déchiffrement (21) du serveur (41) comprennent une clé appairée à la clé du terminal radio (MS).

21. Système d'authentification selon l'une des revendications 16 à 20, dans lequel le terminal radio (MS) comprend au moins une mémoire (10) pour stocker les moyens de hashage (12) et de chiffrement (13), l'unité de traitement (1) du terminal radio (MS) étant agencée pour traiter les données de réponse (F3) du serveur (41) en déclenchant les moyens de hashage (12) stockés dans la mémoire (10), pour déterminer une quatrième empreinte numérique (HF4).

22. Système d'authentification selon la revendication 21, dans lequel l'unité de traitement (1) du terminal radio (MS) est reliée à une interface de communication (14) avec le module d'identité (M) et est apte transmettre au module d'identité (M) via cette interface de communication (14) une requête de chiffrement de la quatrième empreinte numérique (HF4), le module d'identité (M) disposant de moyens de chiffrement (100) pour fournir, en réponse à la requête de chiffrement, une quatrième empreinte numérique chiffrée (CHF4).

23. Système d'authentification selon la revendication 22, dans lequel les moyens de lecture (16) sont reliés aux moyens de calcul (11) dans l'unité de traitement (1) du terminal radio (MS) pour permettre audits moyens de calcul (11) de comparer la quatrième empreinte numérique chiffrée (CHF4) avec la troisième empreinte numérique chiffrée (CHF3) de façon à authentifier des données de réponse (F3) du serveur (41).
